# EUROPEAN PATENT SPECIFICATION

(11) **EP 0 617 813 B1**
(45) Date of publication and mention of the grant of the patent: **25.09.1996**
(21) Application number: 92923772.5
(22) Date of filing: 23.11.1992
(51) Int. Cl.: G06F 17/60

(54) **METHOD OF AND APPARATUS FOR PROVIDING DIRECT AUTOMATIC ACCESS OF A CALENDAR TASK FROM A NON-CALENDAR TASK**
VERFAHREN UND GERÄT FÜR GEWÄHRUNG DIREKTEN AUTOMATISCHEN ZUGANGS EINER KALENDER-AUFGABE AUS EINER NICHT-KALENDER-AUFGABE
PROCEDE ET APPAREIL DONNANT UN ACCES AUTOMATIQUE ET DIRECT A UNE TACHE CALENDAIRE A PARTIR D'UNE TACHE NON CALENDAIRE

(30) Priority: 12.12.1991 US 806575
(43) Date of publication of application: 05.10.1994
(73) Proprietor: International Business Machines Corporation, Armonk, N.Y. 10504 (US)
(72) Inventor: KELLER, Robert, S., Grapevine, TX 76051 (US); WILLIAMS, Marvin, L., Lewisville, TX 75067 (US)
(74) Representative: Schäfer, Wolfgang, Dipl.-Ing.
(86) International application number: EP9202693
(87) International publication number: WO9312490

(56) References cited:
- EP-A- 0 219 197
- EP-A- 0 342 140
- COMMUNICATIONS OF THE ASSOCIATION FOR COMPUTING MACHINERY, vol. 33, no. 7, July 1990, New York, US, pp. 105-116; S.J. KAPLAN ET AL. 'AGENDA: a personal information manager'
- IBM TECHNICAL DISCLOSURE BULLETIN, vol. 31, no. 8, January 1989, Armonk, NY, US, pp. 26-27; 'Context-dependent date/time string processing method'
- IBM TECHNICAL DISCLOSURE BULLETIN, vol. 32, no. 10B, March 1990, Armonk, NY, US, p. 343; 'Date input converted automatically to scientific time'

## Description

### Technical Field of the Invention

This invention relates in general to calendar processing, and in particular to a method of, and apparatus for, providing direct automatic access of a calendar task for a date appearing in a non-calendar task without the necessity of either specifying the date, re-entering the date, or first exiting the non-calendar task.

### Background of the Invention

Conventional systems may provide both calendar tasks and non-calendar tasks such as electronic mail, editor, spreadsheet, database, etc. However, when both types of tasks are provided, no convenient user-friendly technique is available for accessing the calendar tasks directly from the non-calendar tasks. This is a problem when information prompting a user's need of the calendar tasks resides in the non-calendar tasks.

Hereinafter, task means one or more sequences of instructions treated as an element of work to be accomplished by a computer system, including, but not limited to, operating system, control program, application program, module, procedure, routine, and subroutine. Hereinafter, user means anyone who, or anything that, requires the services of a computer system, including, but not limited to, programmer, operator, secretary, computer system, task, operating system, control program, application program, module, procedure, routine, and subroutine.

For a situation which may call for a user needing access to a calendar task, consider an electronic mail document including a date. When such a date appears within the text of the electronic mail document, the user may wish to view his/her schedule for that date. In the prior art, the user would first have to note the date within the text in the electronic mail document. The user would then have to exit the electronic mail. The user next would have to request the calendar tasks. Finally, the user would have to specify the desired date to the calendar tasks in order to view his/her schedule for that date.

The prior art approach presents the user with four difficulties. The first difficulty is the user having to know the sequence of steps necessary to exit the non-calendar task, request the calendar task, and return to the non-calendar task. The second difficulty is the number of keystrokes or selections the user has to make to accomplish this sequence. The third difficulty is that the user has to either re-key or identify the date to the calendar task. The fourth difficulty is that the user must contend with having to translate dates from multiple formats into the format required by the calendar task.

Thus the prior art usage of both non-calendar tasks and calendar tasks requires specialized user knowledge, numerous user steps to enter information, and redundant user entry of date information. As such, there is a need for a method of, and apparatus for, allowing direct automatic user access of a calendar task from a non-calendar task based on the date information contained in the non-calendar task.

EP-A-0 219 197 shows a system and method wherein, upon request by a user, displayed data of a first program which are resident in a first memory, are searched for a key word of a predefined category such as a name and subsequently, information related to said key word such as a telephone number is displayed, whereby said information is part of a second program and is resident in a second memory independent of said first memory.

### Summary of the Invention

The invention disclosed herein comprises a method of, and apparatus for, providing direct automatic access of a calendar task for a date appearing in a non-calendar task without the necessity of either specifying the date, re-entering the date, or first exiting the non-calendar task. The method and apparatus described herein substan tially eliminate or reduce the difficulties of accessing the calendar task from the non-calendar task by providing direct automatic access.

These objects are achieved by a method according to claim 1 and an apparatus according to claim 5. Advantageous embodiments are specified in the respective subclaims.

In accordance with one aspect of the present invention, the user is allowed to place a cursor under a date in a non-calendar task and press a date selection key (or alternatively select the date with a light pen, mouse, or other similar device). When the date is selected in this manner, the calendar task is invoked, and the user's calendar for that date is displayed to the user. When the user exits the viewing of the calendar, the user is returned to viewing the electronic mail.

Another aspect of this invention is that the user can alternatively use a special selection mode and select the non-calendar task object containing the date instead of the date contained within such non-calendar task object to automatically access the calendar task.

Yet another aspect of this invention is that a plurality of date designations can be automatically recognized within such a selected non-calendar task object such as: "12/25/91;" "12-25-91;" "12.25.91;" "12,25,91;" "12/25;" "12-25;" "12.25;" "12,25;" "25;" "25th;" "twenty fifth;" "December 25, 1991;" "25 December 1991;" "December 25;" "December 25th;" "December twenty fifth;" "Wednesday;" "today;" "tonight;" and "tomorrow."

Yet another aspect of this invention is the automatic translation of a recognized date into a format required by the calendar task. For example, the date recognized in a document may be "25 December 1991" which may have to be translated into the format "12/25/91" which may be required by the calendar task.

The present invention has the advantage of allowing direct user access of a calendar task from a non-calendar task. The present invention has the further advantage of saving operator time by simplifying the steps necessary to access a calendar task from a non-calendar task. The present invention has the still further advantage of saving operator time by removing the need to directly select a date. The present invention has the still further advantage of saving operator time by removing the need for the operator to translate dates between conflicting non-calendar task formats and calendar task formats.

### Brief Description of the Drawings

For a more complete understanding of the present invention and the advantages thereof, reference is now made to the Detailed Description in conjunction with the attached Drawings, in which:
- Fig. 1: through Fig. 11 illustrate an embodiment in accordance with the prior art;
- Fig. 12: through Fig. 14 illustrate a preferred embodiment in accordance with the present invention;
- Fig. 15: is a flow chart of the present invention;
- Fig. 16: is a flow chart of the numeric processing portion of the date recognition block of Fig. 15 of the present invention;
- Fig. 17: is a flow chart of the text processing portion of the date recognition block of Fig. 15 of the present invention;
- Fig. 18: is a flow chart of an alternative embodiment of the present invention; and
- Fig. 19: is a block diagram of a computer system which may be utilized to implement the method and apparatus of the present invention.

### Detailed Description of the Invention

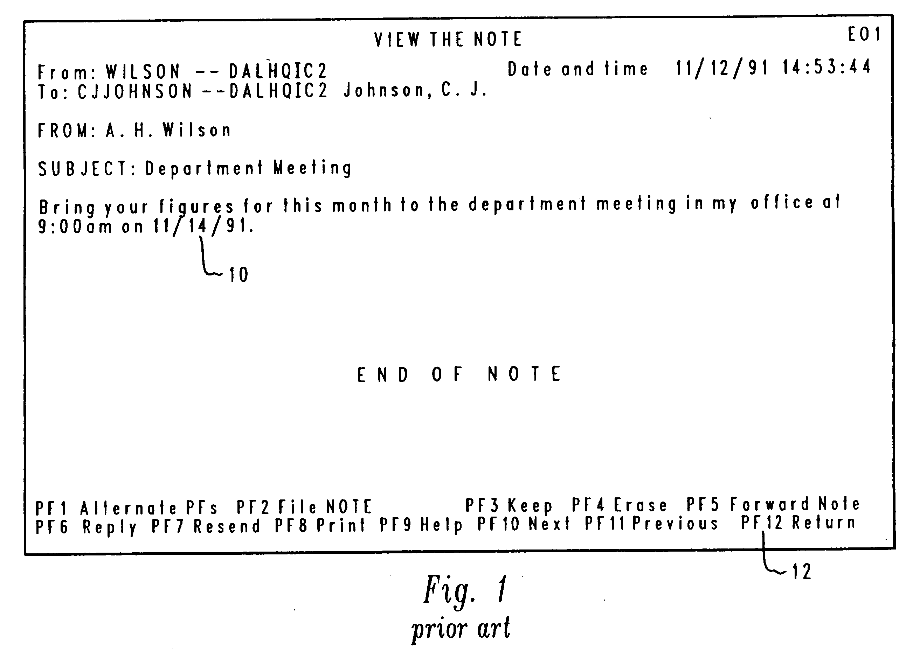

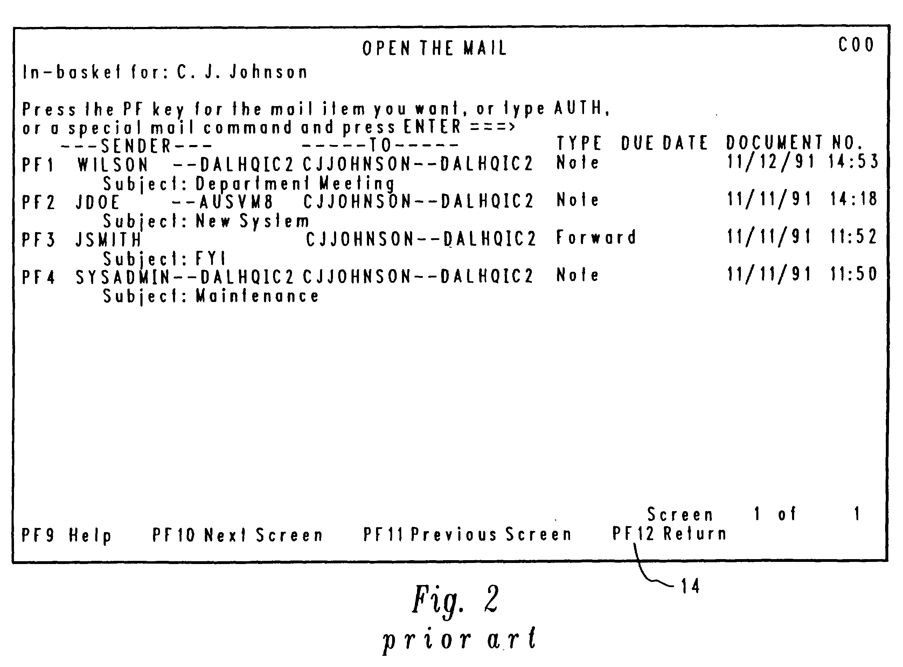

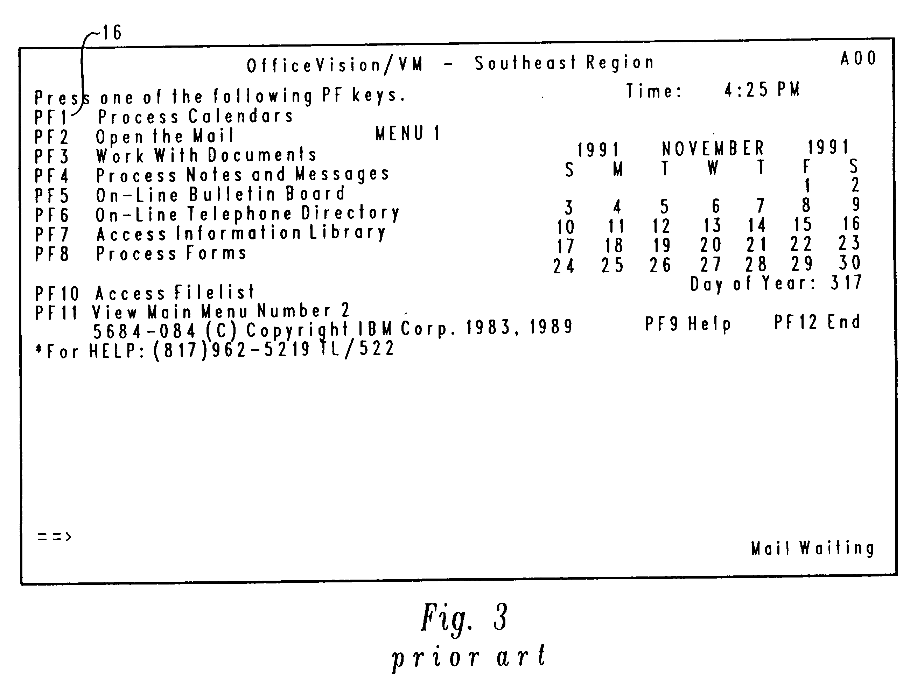

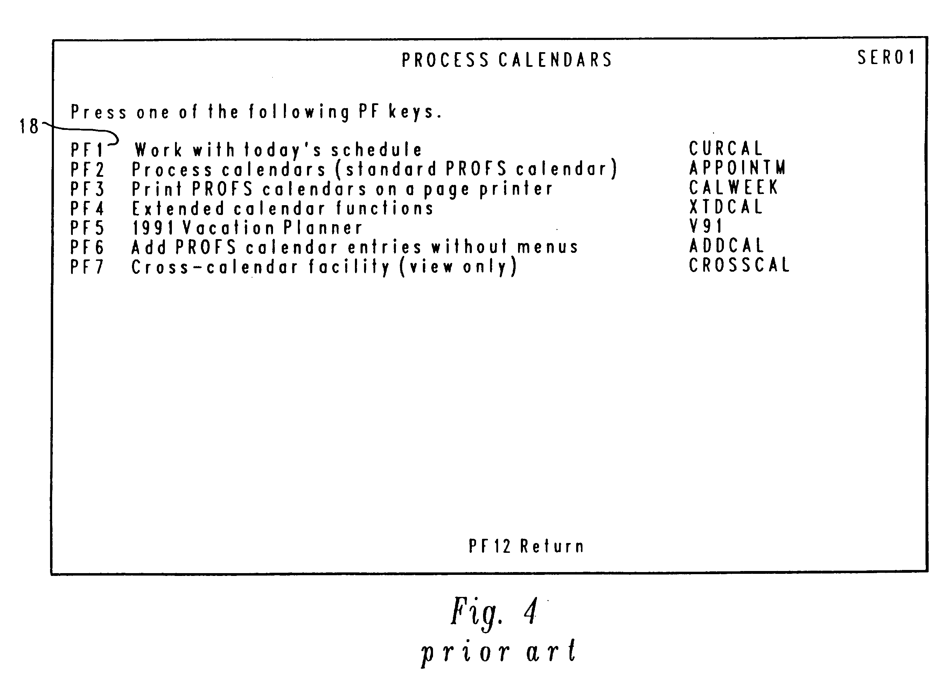

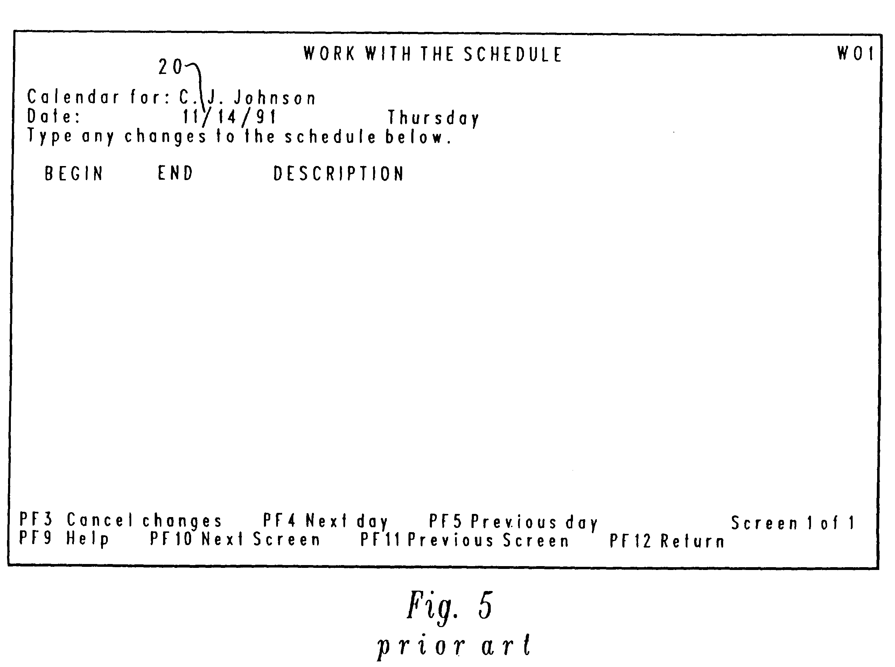

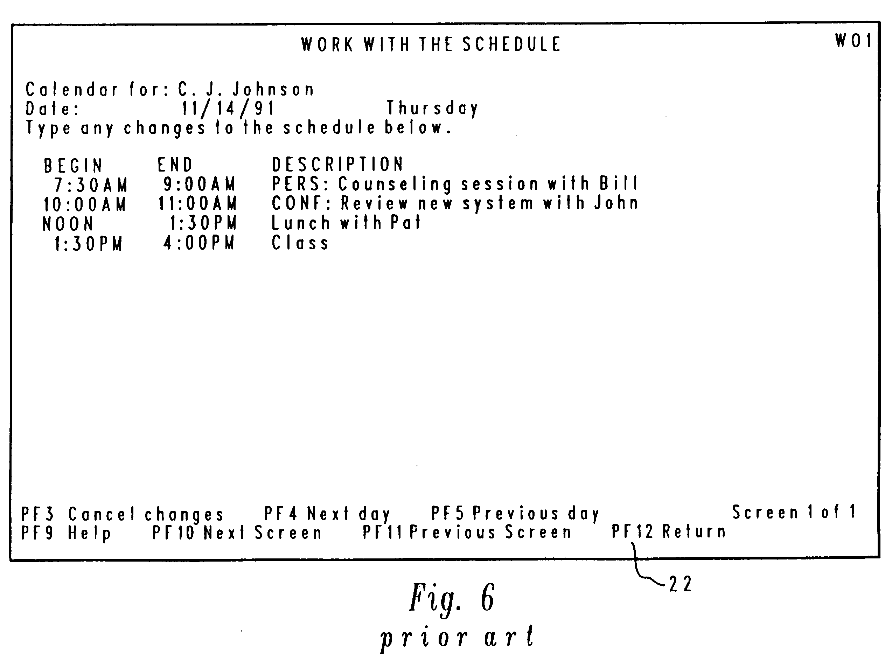

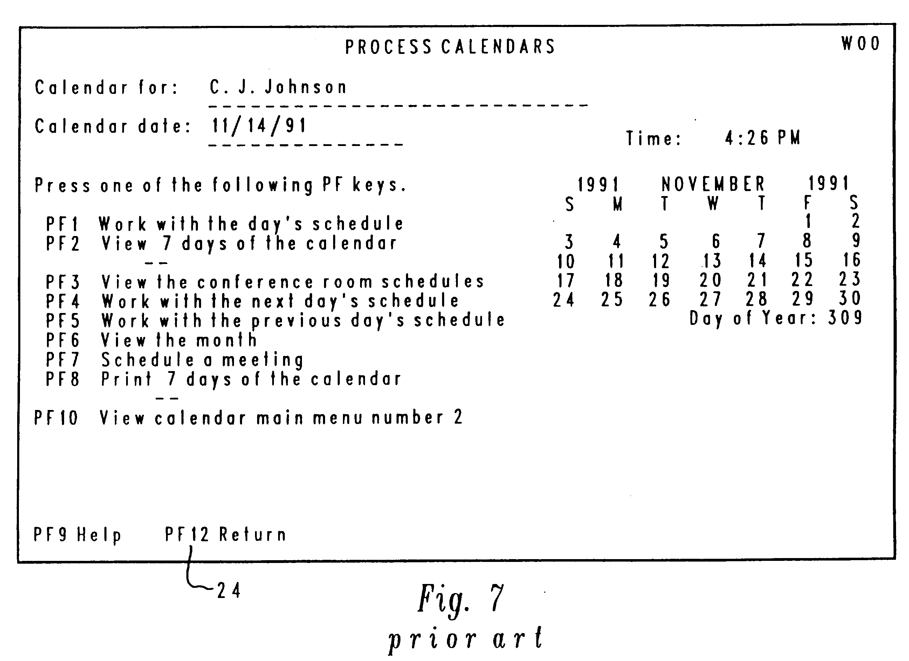

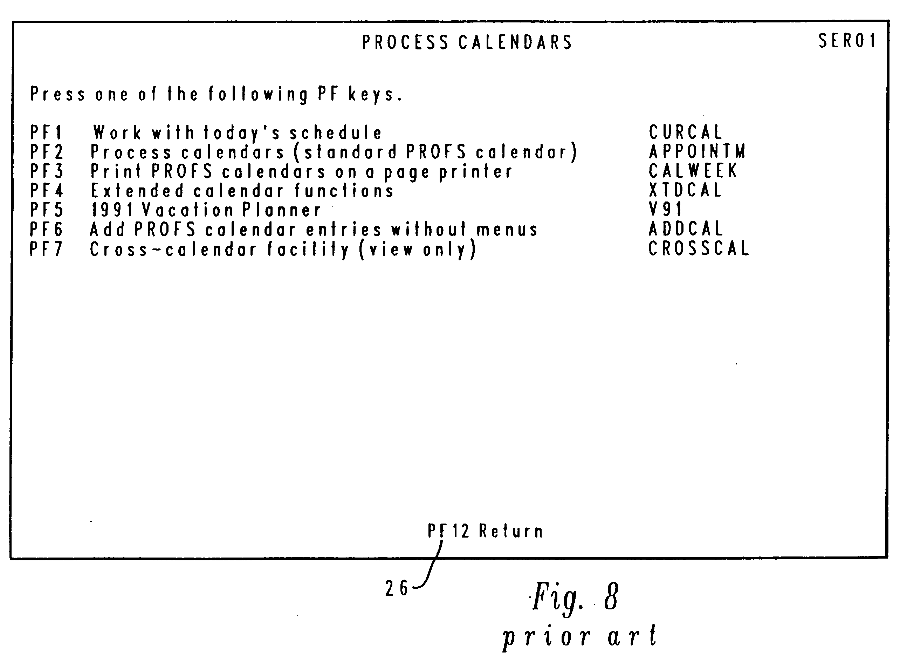

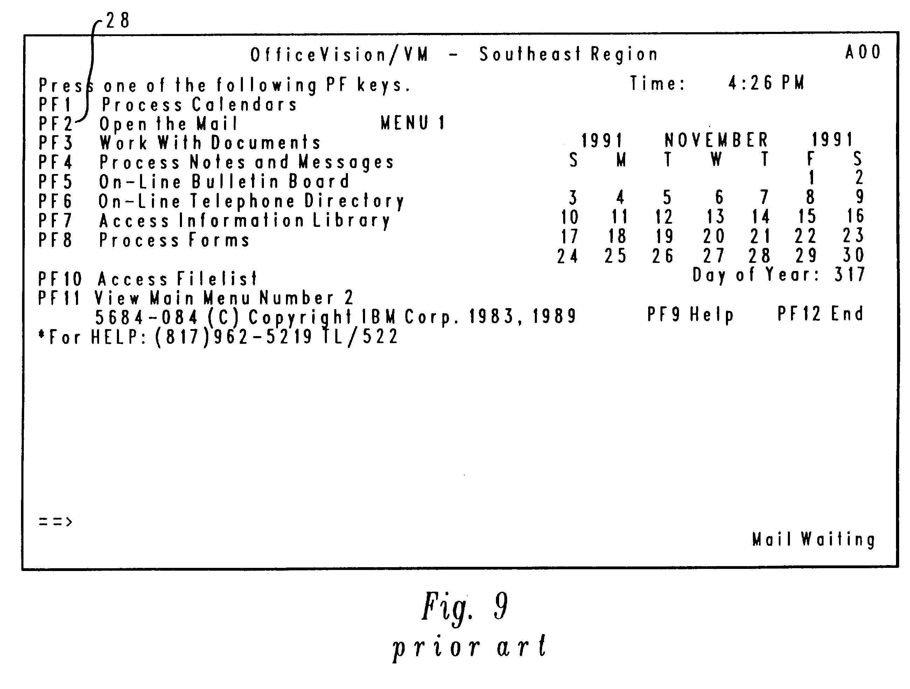

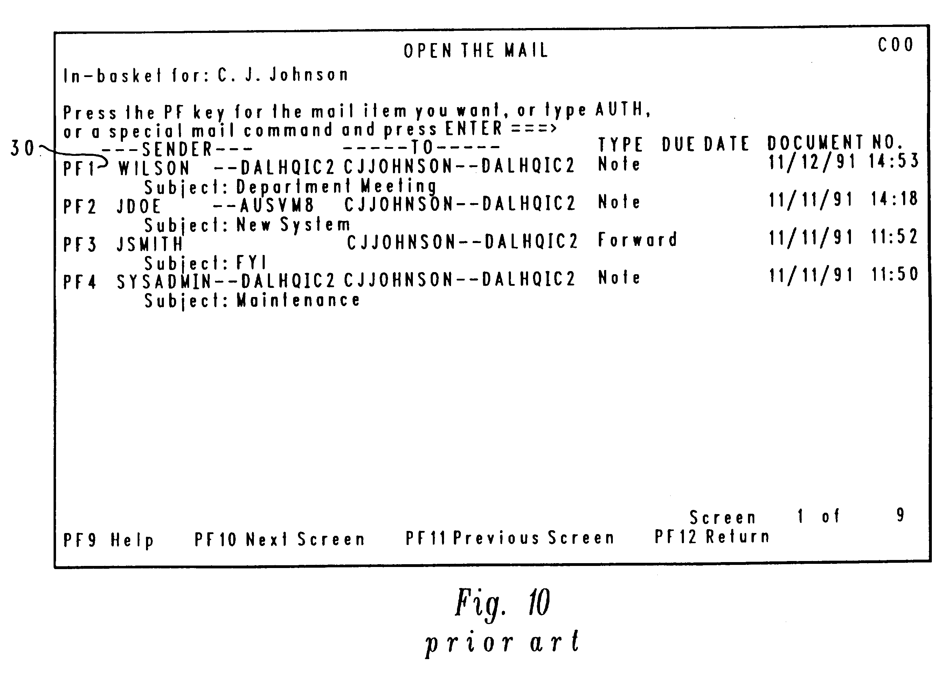

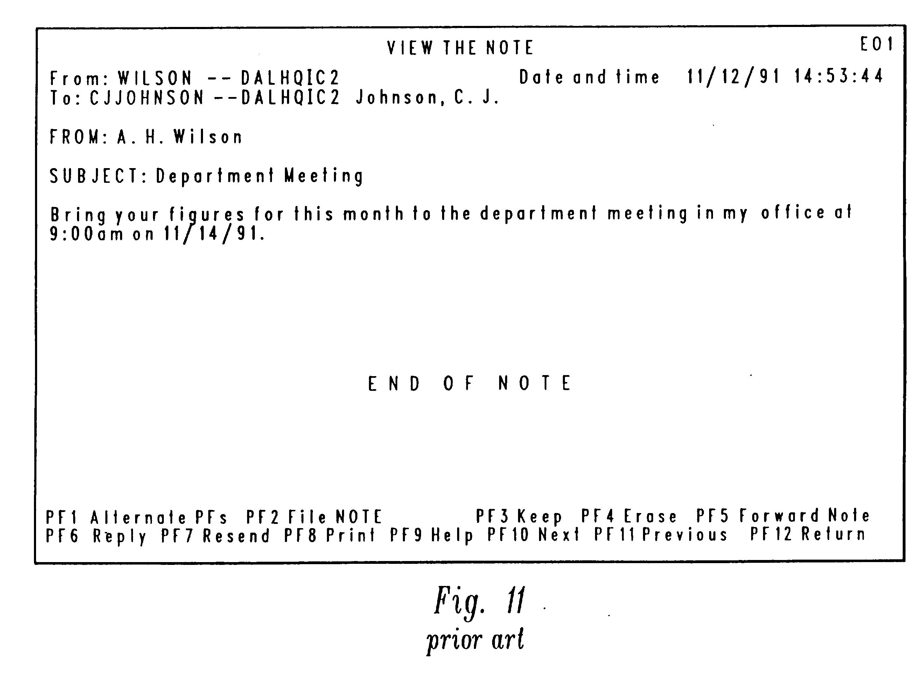

Referring first to Fig. 1 through Fig. 11, an example of a prior art calendar task access from a non-calendar task is shown. Fig. 1 shows a non-calendar task screen displaying an electronic mail document which includes a date 10. If a user wishes to view his/her schedule for that date, then the user must first note the date either mentally and/or with pencil and paper. Second, the user must then exit the electronic mail by pressing or selecting an exit or return function key 12, represented by PF12 in Fig. 1. This step yields an electronic mail selection screen as shown in Fig. 2. Third, the user must then exit the electronic mail selection screen by pressing or selecting the an exit or return function key 14, represented by PF12 in Fig. 2. This step yields a task selection screen as shown in Fig. 3. Fourth, the user next requests a calendar task by pressing or selecting a calendar key 16, represented by PF1 in Fig. 3. This yields a calendar task selection screen as shown in Fig. 4. Fifth, the user next requests a schedule task by pressing or selecting a schedule key 18, represented by PF1 in Fig. 4. This yields a schedule screen as shown in Fig. 5. Sixth, the user enters the date 20 to the schedule task in order to view his/her schedule for that date. This yields a schedule screen as shown in Fig. 6. The user may then perform desired schedule tasks for that date including viewing and editing. Seventh, after completion of the schedule tasks, the user exits the sched ule tasks screen by pressing or selecting an exit or return function key 22, represented by PF12 in Fig. 6. This yields a first calendar task selection screen as shown in Fig. 7. Eighth, the user exits the first calendar task selection screen by pressing or selecting an exit or return function key 24, represented by PF12 in Fig. 7. This yields a second calendar task selection screen as shown in Fig. 8. Ninth, the user exits the second calendar task selection screen by pressing or selecting an exit or return function key 26, represented by PF12 in Fig. 8. This step yields a task selection screen as shown in Fig. 9. Tenth, the user next requests the original electronic mail task by pressing or selecting an electronic mail task selection key 28, represented by PF2 in Fig. 9. This yields an electronic mail selection screen as shown in Fig. 10. Eleventh, the user selects the electronic mail document that the user was originally viewing by pressing or selecting an appropriate document selection key 30, represented by PF1 in Fig. 10. This finally yields the electronic mail screen shown in Fig. 11 from which the user originally started.

This series of steps of the prior art approach clearly demonstrates the difficulties of such an approach: the user having to know the sequence of steps necessary to exit the non-calendar task, request the calendar task, and return to the non-calendar task; the excessive number of keystrokes or selections the user has to make to accomplish this sequence; the user having to either re-key or identify the date to the calendar task; and the user having to translate dates from multiple formats into the format required by the calendar task.

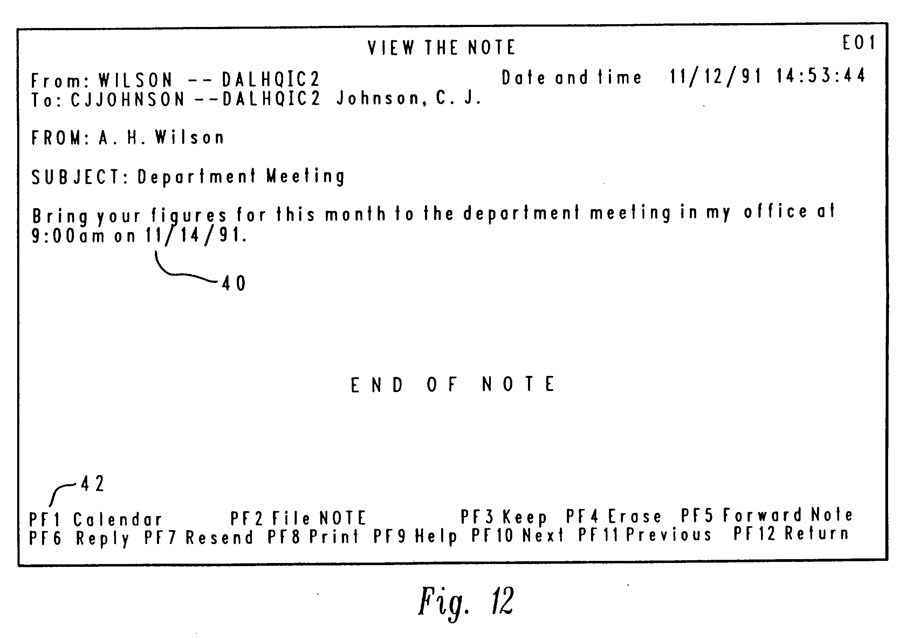

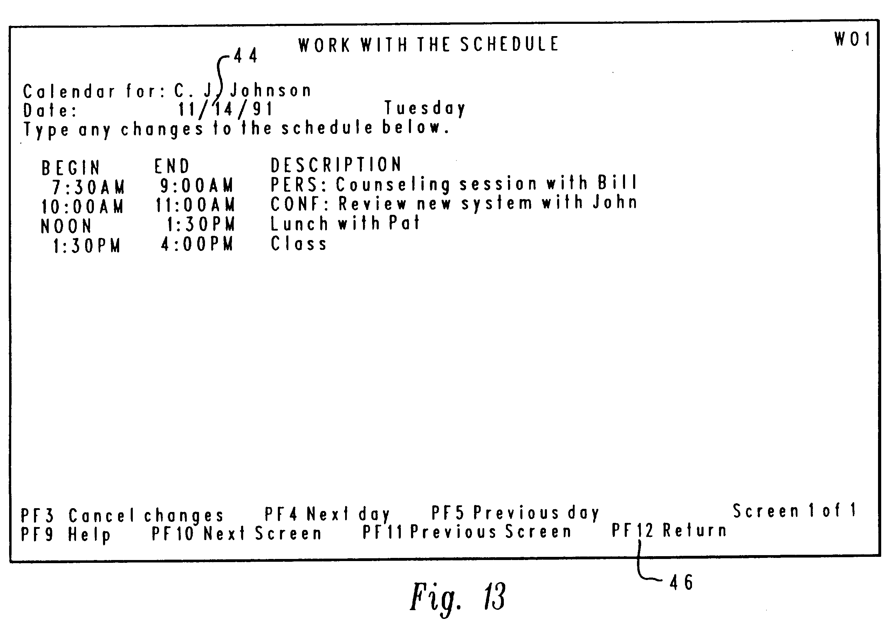

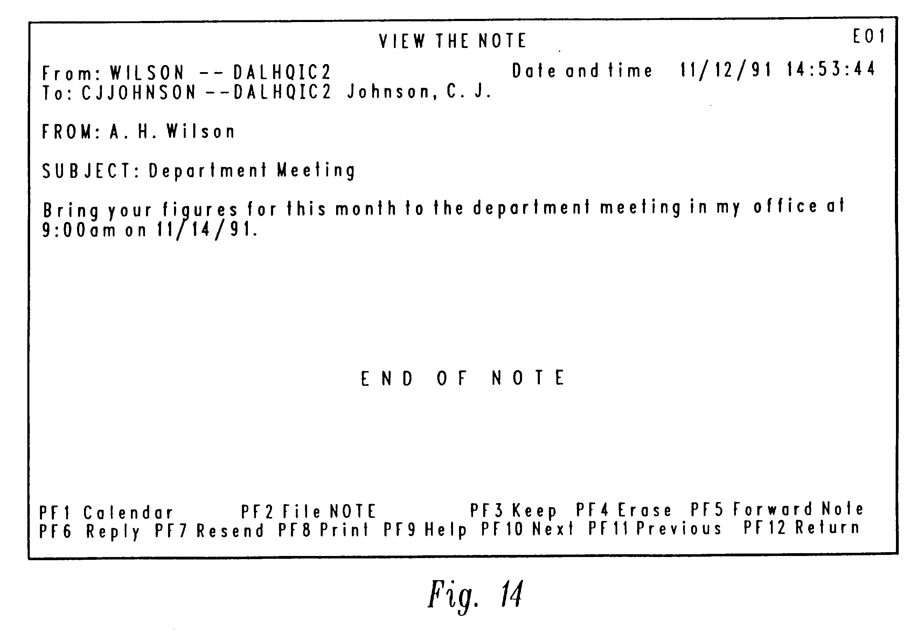

Referring next to Fig. 12 through Fig. 14, an example of a calendar task access from a non-calendar task in accordance with the present invention is shown. Fig. 12 shows a non-calendar task screen displaying an electronic mail document which includes a date 40. If a user wishes to view his/her schedule for that date, then the user merely requests a calendar task by pressing or selecting a calendar task key 42, represented by PF1 in Fig. 12. This yields a schedule screen as shown in Fig. 13 for the date 44 included in the electronic mail document. Fig. 13 is similar to Fig. 6. The user may then perform desired schedule tasks for that date including viewing and editing. After completion of the schedule tasks, the user exits the calendar tasks by pressing or selecting an exit or return function key 46, represented by PF12 in Fig. 13. This step yields the non-calendar task screen shown in Fig. 14 from which the user originally started.

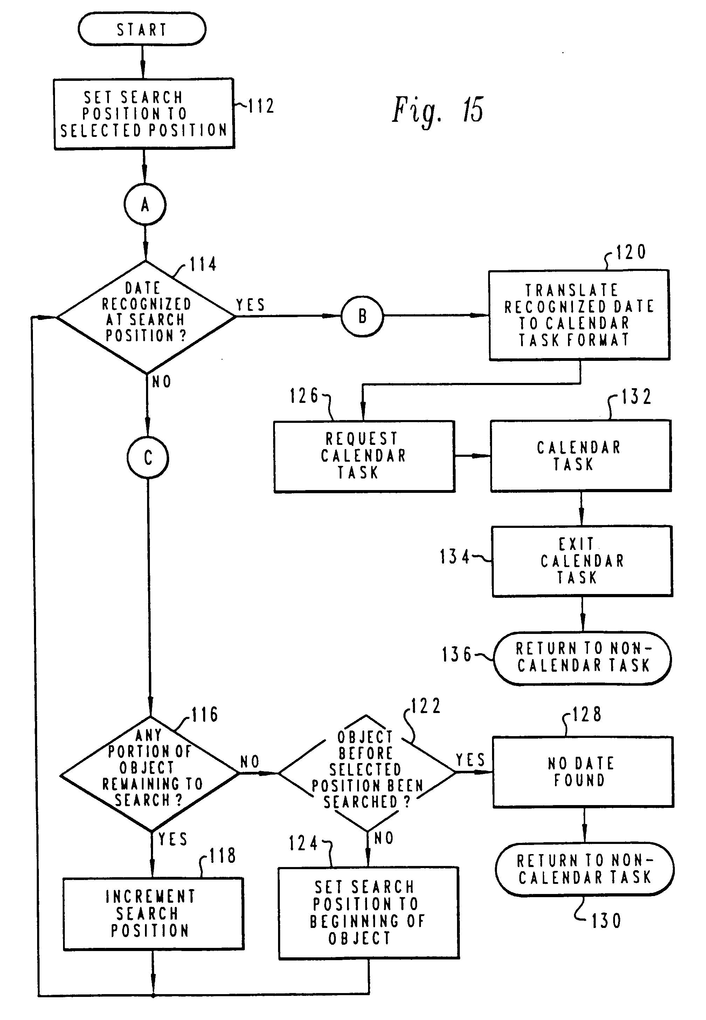

Referring next to Fig. 15 through Fig. 17, flowcharts illustrating operations preferred in carrying out the present invention are shown. In the flowcharts, the graphical conventions of a diamond for a test or decision and a rectangle for a process or function are used. These conventions are well understood by those skilled in the art, and the flowcharts are sufficient to enable one of ordinary skill to write code in any suitable computer programming language. As shown in Fig. 15 at block 112, after the calendar task key is selected, a present search position is set to a selected position within the non-calendar task object in which the calendar task key is selected. This non-calendar task object may be a multimedia object such as a multimedia text object containing a date in text form, a multimedia image object containing a date in image form, or a multimedia audio object containing the date in audio form. The selected position corresponds to a location of a cursor in a system using a cursor, or a location of a pointer in a system using a pointer. Decision block 114 is used to determine whether or not a valid date is recognized at the present search position. If no valid date is recognized at the present search position, then decision block 116 determines whether or not any portion of the non-calendar task object after the present search position remains to be searched. If a portion of the non-calendar task object after the present search position remains to be searched, then process block 118 increments the present search position to the next position within the non-calendar task object. Thereafter, the program returns to decision block 114 for further recognition processing.

Returning now to decision block 116, if no portion of the non-calendar task object after the present search position remains to be searched, then decision block 122 determines whether or not a portion of the non-calendar task object before the selected position remains to be searched. If a portion of the non-calendar task object before the selected position remains to be searched, then process block 124 sets the present search position to the beginning of the non-calendar task object. Thereafter, the program returns to decision block 114 for further recognition processing.

Returning now to decision block 122, if the portion of the non-calendar task object before the selected position has already been searched, then process block 128 sets a Date Flag to false to indicate that the non-calendar task object was fully searched and no date was found. Thereafter, process block 130 returns the program to the non-calendar task.

Returning now to decision block 114, if a valid date is recognized at the present search position, then process block 120 sets the Date Flag to true to indicate that a valid date was found. Process block 120 further translates the valid date recognized by process block 114 into a date format required by the calendar task. Thereafter, process block 126 requests the calendar task 132 with the translated date. After completion of the calendar task 132, process block 134 exits the calendar task 132, and process block 136 returns the program to the non-calendar task.

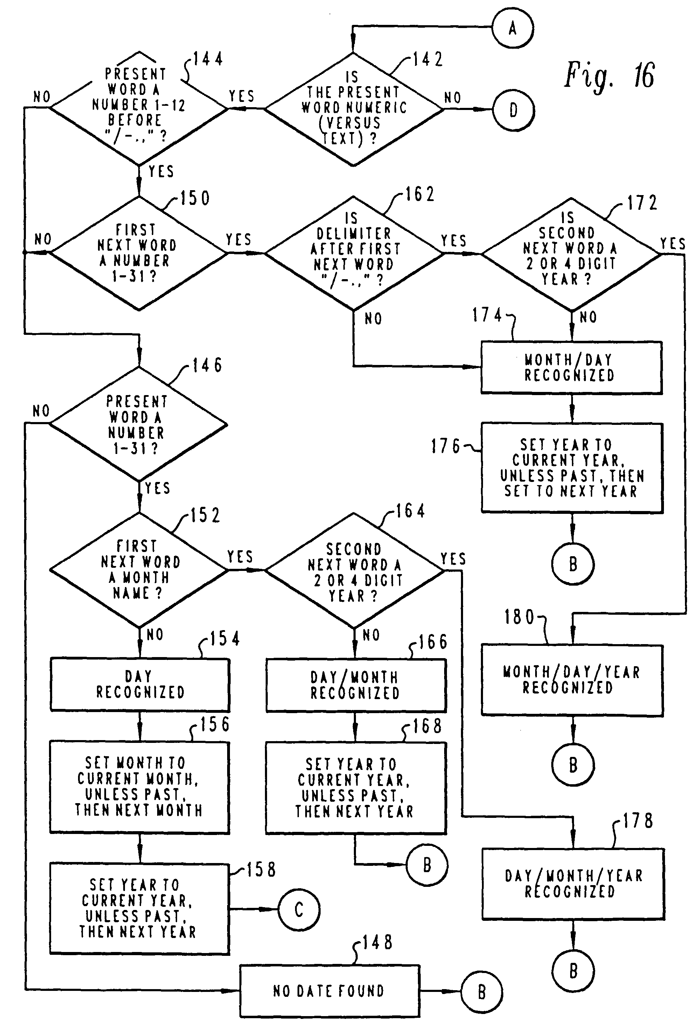

Referring next to Fig. 16, a flowchart of the date recognition logic which is an expansion of decision block 114 from Fig. 15 is shown. Hereinafter, word means a sequence of text or numeric characters ending in a non-text or non-numeric delimiter character. For example, "12/25/91" consists of three words "12", "25", and "91" separated by the delimiter "/". As a further example, "12 December 1991" consists of the three words "12", "December", and "1991" separated by blank delimiters. Decision block 142 deter mines whether a word at the present search position is numeric versus text. If the word at the present search position is numeric, then the program searches for possible dates in either American format or European format. Decision blocks 144, 150, 162, and 172 search for a date in American numeric format which consists of the sequence numeric month, numeric day of the month, and numeric year, or alternatively the subset of numeric month and numeric day of the month. Decision blocks 146, 152, and 164 search for a date in European numeric format which consists of the sequence numeric day of the month, numeric month, and numeric year, or alternatively the subset of numeric day of the month and numeric month.

Returning now to decision block 142, if the word at the present search position is numeric, then decision block 144 determines whether the word at the present search position is a number one through twelve followed by a date delimiter ("/", "-", ".", or ","). If the word at the present search position is a number one through twelve followed by a delimiter, then decision block 150 determines whether a first word after the present search position is a number one through thirty-one. If the first word after the present search position is a number one through thirty-one, then decision block 162 determines whether a delimiter after the first word is a date delimiter. If the delimiter after the first word is a date delimiter, then decision block 172 determines whether a second word after the present search position is a two digit or four digit number. If the second word after the present search position is a two digit or four digit number, then a date in American numeric format consisting of the sequence numeric month, numeric day of month, and numeric year has been recognized, and process block 180 sets the Date Flag to true to indicate that a date has been recognized. Process block 180 further sets a Month Register equal to the word at the present search position, a Day Register equal to the first word after the present search position, and a Year Register equal to the second word after the present search position. Thereafter, the program returns to process block 120 for translation of the recognized date into the calendar task date format.

Returning now to decision block 172, if the second word after the present search position is not a two digit or four digit number, then a date in American numeric format consisting of the sequence numeric month and numeric day of month has been recognized, and process block 174 sets the Date Flag to true to indicate that a date has been recognized. Process block 174 further sets the Month Register equal to the word at the present search position and the Day Register equal to the first word after the present search position. Thereafter, process block 176 sets the Year Register equal to the current year, as no year was recognized, unless such date is past, in which case, the Year Register is set equal to next year. Thereafter, the program returns to process block 120 for translation of the recognized date into the calendar task date format.

Returning now to decision block 162, if the delimiter after the next word is not a date delimiter, then a date in American numeric format consisting of the sequence numeric month and numeric day of month has been recognized, and processing continues through process block 174 as discussed in the previous paragraph.

Returning now to decision block 150, if the first word after the present search position is not a number one through thirty-one, then processing continues through decision block 146 for European format processing. Similarly, returning to decision block 144, if the word at the present search position is not a number one through twelve followed by a delimiter, then processing continues through decision block 146. Thereafter, decision block 146 determines whether the word at the present search position is a number one through thirty-one. If the word at the present search position is a number one through thirty-one, then decision block 152 determines whether the first word after the present search position is a month name. If the first word after the present search position is a month name, then decision block 164 determines whether the second word after the present search position is a two-digit or four- digit number. If the second word after the present search position is a two-digit or four-digit number, then a date in European format consisting of the sequence numeric day of month, month name, and numeric year has been recognized, and process block 178 sets the Date Flag to true to indicate that a date has been recognized. Process block 178 further sets the Day Register equal to the word at the present search position, the Month Register equal to the first word after the present search position, and the Year Register equal to the second word after the present search position. Thereafter, the program returns to process block 120 for translation of the recognized date into the calendar task date format.

Returning now to decision block 164, if the second word after the present search position is not a two digit or four digit number, then a date in European format consisting of the sequence numeric day of month and month name has been recognized, and process block 166 sets the Date Flag to true to indicate that a date has been recognized. Process block 166 further sets the Day Register equal to the word at the present search position and the Month Register equal to the first word after the present search position. Thereafter, process block 168 sets the Year Register equal to the current year, as no year was recognized, unless such date is past, in which case, the Year Register is set equal to next year. Thereafter, the program returns to process block 120 for translation of the recognized date into the calendar task date format.

Returning now to decision block 152, if the first word after the present search position is not a month name, then a date in the format consisting only of the numeric day of month has been recognized, and process block 154 sets the Date Flag to true to indicate that a date has been recognized. Process block 154 further sets the Day Register equal to the word at the present search position. Thereafter, process block 156 sets the Month Register equal to the current month, as no month was recognized, unless such date is past, in which case, the Month Register is set equal to next month. Thereafter, process block 158 sets the Year Register equal to the current year, as no year was recognized, unless such date is past, in which case, the Year Register is set equal to next year. Thereafter, the program returns to process block 120 for translation of the recognized date into the calendar task date format.

Returning now to decision block 146, if the word at the present search position is not a number one through thirty-one, then no date has been recognized, and process block 148 sets the Date Flag to false to indicate that no date has been recognized. Thereafter, the program returns to process block 116 to process any remaining portion of the non-calendar task object.

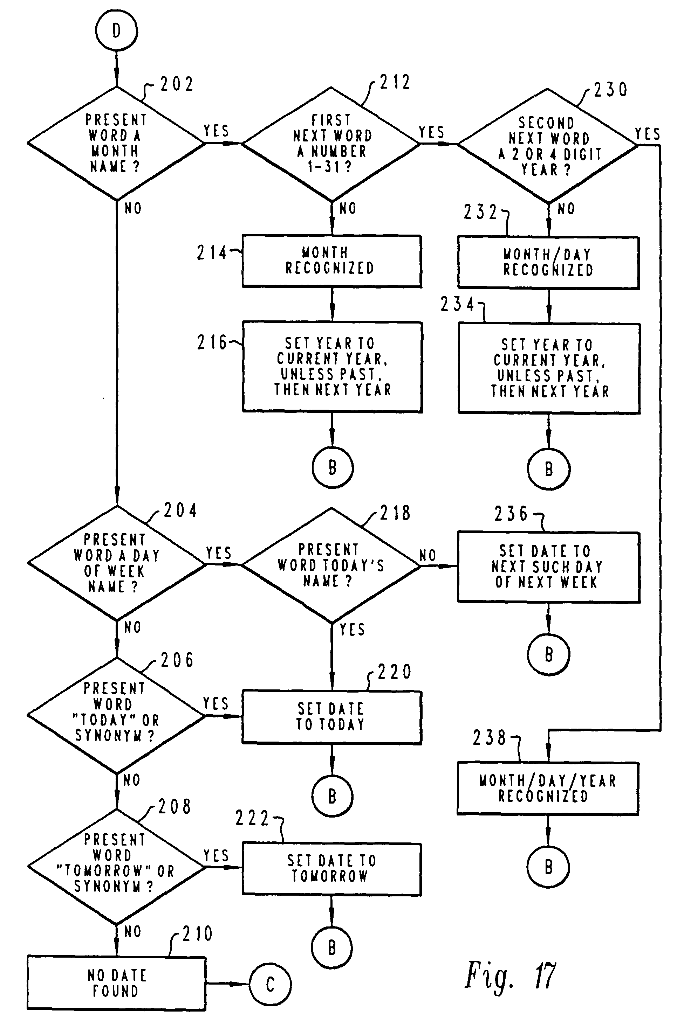

Referring next to Fig. 17, a flowchart of the text processing portion of the date recognition logic which is an expansion of decision block 114 from Fig. 15 is shown. If decision block 142 in Fig. 16 determines that the word at the present search position is text versus text, then decision block 202 in Fig. 17 determines whether the word at the present search position is a month name. If the word at the present search position is a month name, then deci sion block 212 determines whether the first word after the present search position is a number one through thirty-one. If the first word after the present search position is a number one through thirty-one, then decision block 230 determines whether the second word after the present search position is a two-digit or four-digit number. If the second word after the present search position is a two-digit or four-digit number, then then a date in American text format consisting of the sequence text month, numeric day of month, and numeric year has been recognized, and process block 238 sets the Date Flag to true to indicate that a date has been recognized. Process block 238 further sets the Month Register equal to the word at the present search position, the Day Register equal to the first word after the present search position, and the Year Register equal to the second word after the present search position. Thereafter, the program returns to process block 120 for translation of the recognized date into the calendar task date format.

Returning now to decision block 230, if the second word after the present search position is not a two digit or four digit number, then a date in American text format consisting of the sequence text month and numeric day of month has been recognized, and process block 232 sets the Date Flag to true to indicate that a date has been recognized. Process block 232 further sets the Month Register equal to the word at the present search position and the Day Register equal to the first word after the present search position. Thereafter, process block 234 sets the Year Register equal to the current year, as no year was recognized, unless such date is past, in which case, the Year Register is set equal to next year. Thereafter, the program returns to process block 120 for translation of the recognized date into the calendar task date format.

Returning now to decision block 212, if the first word after the present search position is not a number one through thirty-one, then a date in American text format consisting of only the text month has been recognized, and process block 214 sets the Date Flag to true to indicate that a date has been recognized. Process block 214 further sets the Month Register equal to the word at the present search position.

Thereafter, process block 216 sets the Year Register equal to the current year, as no year was recognized, unless such date is past, in which case, the Year Register is set equal to next year. Thereafter, the program returns to process block 120 for translation of the recognized date into the calendar task date format.

Returning now to decision block 202, if the word at the present search position is not a month name, then decision block 204 determines whether the word at the present search position is a name of a day of the week. If the word at the present search position is a name of a day of the week, then decision block 218 determines whether such name of a day of the week is today's name. If such name of a day of the week is today's name, then process block 220 sets the Date Flag to true to indicate that a date has been recognized. Process block 220 further sets the Month Register equal to today's month, the Day Register equal to today's day of the month, and the Year Register equal to today's year. Thereafter, the program returns to process block 120 for translation of the recognized date into the calendar task date format.

Returning now to decision block 218, if such name of a day of the week is not today's name, then process block 236 sets the Date Flag to true to indicate that a date has been recognized. Process block 236 further sets the Month Register equal to the next such day's month, the Day Regis ter equal to the next such day's day of the month, and the Year Register equal to the next such day's year. Thereaf ter, the program returns to process block 120 for transla tion of the recognized date into the calendar task date format.

Returning now to decision block 204, if the word at the present search position is not a name of a day of the week, then decision block 206 determines if the word at the present search position is the word "today" or a synonym thereof. If the word at the present search position is the word "today" or a synonym thereof, then processing continues through processing block 220 discussed above. If the word at the present search position is not the word "today" or a synonym thereof, then decision block 208 determines whether the word at the present search position is the word "tomorrow" or a synonym thereof. If the word at the present search position is the word "tomorrow" or a synonym thereof, process block 222 sets the Date Flag to true to indicate that a date has been recognized. Process block 222 further sets the Month Register equal to tomorrow's month, the Day Register equal to tomorrow's day of the month, and the Year Register equal to tomorrow's year. Thereafter, the program returns to process block 120 for translation of the recognized date into the calendar task date format.

Returning now to decision block 208, if the word at the present search position is not the word "tomorrow" or a synonym thereof, then no date has been recognized, and process block 210 sets the Date Flag to false to indicate that no date has been recognized. Thereafter, the program returns to process block 116 to process any remaining portion of the non-calendar task object.

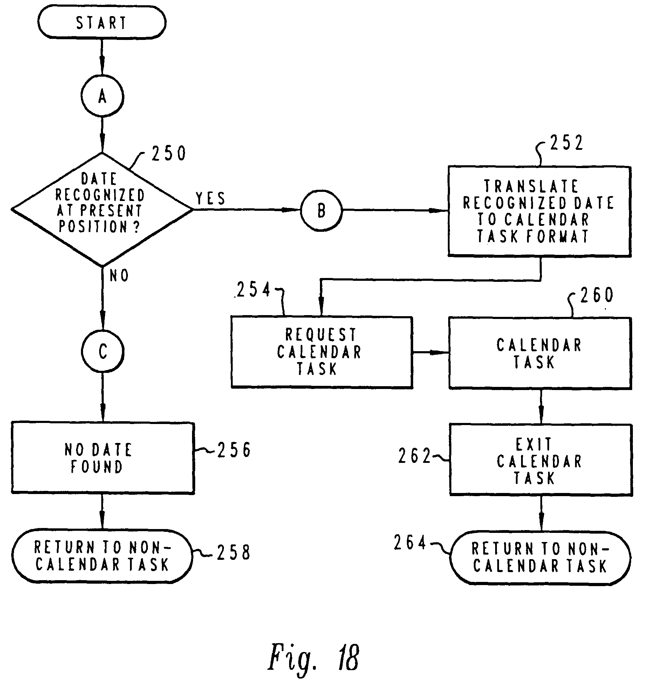

Referring now to Fig. 18, a flowchart illustrating operations for an alternative embodiment for carrying out the present invention is shown. This alternative embodiment does not contain a date searching capability which allows a user to select a non-calendar task object and which finds a date within such non-calendar task object. Instead, this alternative embodiment requires that the user select the date. After a calendar task key is selected, a present position corresponds to a location of a cursor in a system using a cursor, or a location of a pointer in a system using a pointer. Decision block 250 is used to determine whether or not a valid date is recognized at the present position. If no valid date is recognized at the present position, then process block 256 sets a Date Flag to false to indicate that the word at the present position was not recognized as a date and that no date was found. Thereafter, process block 258 returns the program to the non-calendar task.

Returning now to decision block 250, if a valid date is recognized at the present position, then process block 252 sets the Date Flag to true to indicate that a valid date was found. Process block 252 further translates the valid date recognized by process block 250 into a date format required by the calendar task. Thereafter, process block 254 requests the calendar task 260 with the translated date. After completion of the calendar task 260, process block 262 exits the calendar task 260, and process block 264 returns the program to the non-calendar task.

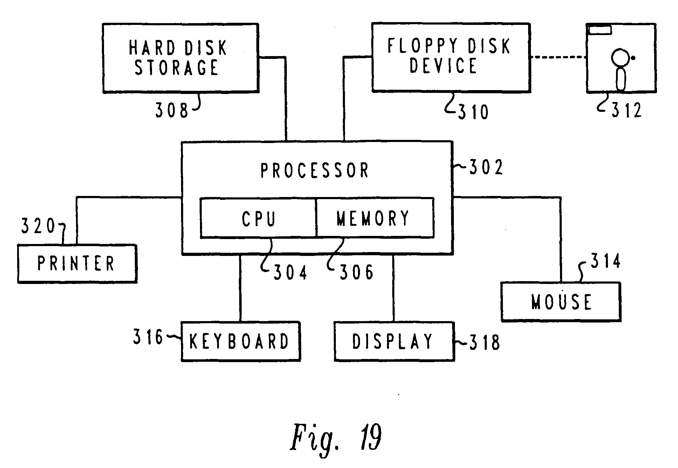

Referring now to Fig. 19, there is shown in block diagram form, a data processing system 300 according to the present invention. The data processing system 300 includes a processor 302, which includes a central processing unit (CPU) 304, and a memory 306. Additional memory, in the form of a hard disk file storage 308 and a floppy disk device 310, is connected to the processor 302. Floppy disk device 310 receives a diskette 312 which has computer program code recorded thereon that implements the present invention in the data processing system 300. The data processing system 300 includes user interface hardware, including a mouse 314 and a keyboard 316 for allowing user input to the processor 302 and a display 318 for presenting visual data to the user. The data processing system may also include a printer 320.

## Claims

1. A method of providing a user of a computer with direct automatic access to a calendar task from a non-calendar task comprising the steps of:
selecting by the user a date within said non-calendar task and
automatically causing said calendar task to be invoked in response to said selecting said date,
thereby displaying the user's calendar for said selected date and providing the user with the possibility of performing desired schedule tasks including viewing and editing.

2. A method according to claim 1, wherein the step of selecting by the user a date within said non-calendar task, comprises the steps of:
selecting by the user a non-calendar task object containing said date; and
automatically searching for said date.

3. A method according to claim 1, wherein the step of selecting by the user a date within said non-calendar task, comprises the steps of:
selecting by the user a non-calendar task object containing said date;
automatically searching for said date; and
automatically translating said date into a format of said calendar task.

4. A method according to claim 1, wherein the step of selecting by the user a date within said non-calendar task, comprises the steps of:
selecting by the user said date; and
automatically translating said date into a format of said calendar task.

5. An apparatus for providing a user of a computer with direct automatic access to a calendar task from a non-calendar task comprising:
means for selecting by the user a date within said non-calendar task; and
means responsive to said selecting said date for automatically causing said calendar task to be invoked
thereby displaying the user's calendar for said selected date and providing the user with the possibility of performing desired schedule tasks including viewing and editing.

6. An apparatus according to claim 5, wherein said means for selecting by the user a date within said non-calendar task, comprises:
means for selecting by the user a non-calendar task object containing said date; and
means for automatically searching for said date.

7. An apparatus according to claim 5, wherein said means for selecting by the user a date within said non-calendar task, comprises:
means for selecting by the user a non-calendar task object containing said date;
means for automatically searching for said date; and
means for automatically translating said date into a format of said calendar task.

8. An apparatus according to claim 5, wherein said means for selecting by the user a date within said non-calendar task, comprises:
means for selecting by the user said date; and
means for automatically translating said date into a format of said calendar task.

## Patentansprüche

1. Verfahren, um einem Nutzer eines Computers direkten automatischen Zugriff auf ein Kalender-Programm aus einem Nicht-Kalender-Programm zu gewähren, das die folgenden Schritte umfaßt:
Auswählen eines Datums innerhalb des Nicht-Kalender-Programms durch den Nutzer und
automatisch das Aufrufen des Kalender-Programms als Antwort auf das Auswählen des Datums veranlassen,
dabei den Kalender des Nutzers für das ausgewählte Datum anzeigen und dem Nutzer die Möglichkeit des Ausführens gewünschter Tasks des Tageskalenders einschließlich des Anzeigens und Editierens gewähren.

2. Verfahren gemäß Anspruch 1, wobei der Schritt des Auswählens eines Datums innerhalb des Nicht-Kalender-Programms durch den Nutzer die folgenden Schritte umfaßt:
Auswählen eines Objektes des Nicht-Kalender-Programms, welches das Datum enthält, durch den Nutzer; und
automatisches Suchen nach dem Datum.

3. Verfahren gemäß Anspruch 1, wobei der Schritt des Auswählens eines Datums innerhalb des Nicht-Kalender-Programms durch den Nutzer die folgenden Schritte umfaßt:
Auswählen eines Objektes des Nicht-Kalender-Programms, welches das Datum enthält, durch den Nutzer;
automatisches Suchen nach dem Datum; und
automatisches Umwandeln des Datums in ein Format des Kalender-Programms.

4. Verfahren gemäß Anspruch 1, wobei der Schritt des Auswählens eines Datums innerhalb des Nicht-Kalender-Programms durch den Nutzer die folgenden Schritte umfaßt:
Auswählen des Datums durch den Nutzer; und
automatisches Umwandeln des Datums in ein Format des Kalender-Programms.

5. Gerät, um einem Nutzer eines Computers direkten automatischen Zugriff auf ein Kalender-Programm aus einem Nicht-Kalender-Programm zu gewähren, das folgendes umfaßt:
Mittel zum Auswählen eines Datums innerhalb des Nicht-Kalender-Programms durch den Nutzer; und
Mittel, die auf das Auswählen des Datums reagieren, um automatisch das Aufrufen des Kalender-Programms zu veranlassen,
dabei den Kalender des Nutzers für das ausgewählte Datum anzeigen und dem Nutzer die Möglichkeit gewähren, gewünschte Tasks des Tageskalenders einschließlich des Anzeigens und Editierens auszuführen.

6. Gerät gemäß Anspruch 5, wobei das Mittel zum Auswählen eines Datums innerhalb des Nicht-Kalender-Programms durch den Nutzer folgendes umfaßt:
Mittel zum Auswählen eines Objektes des Nicht-Kalender-Programms, welches das Datum enthält, durch den Nutzer; und
Mittel zum automatischen Suchen nach dem Datum.

7. Gerät gemäß Anspruch 5, wobei das Mittel zum Auswählen eines Datums innerhalb des Nicht-Kalender-Programms durch den Nutzer folgendes umfaßt:
Mittel zum Auswählen eines Objektes des Nicht-Kalender-Programms, welches das Datum enthält, durch den Nutzer;
Mittel zum automatischen Suchen nach dem Datum; und
Mittel zum automatischen Umwandeln des Datums in ein Format des Kalender-Programms.

8. Gerät gemäß Anspruch 5, wobei das Mittel zum Auswählen eines Datums innerhalb des Nicht-Kalender-Programms durch den Nutzer folgendes umfaßt:
Mittel zum Auswählen des Datums durch den Nutzer; und
Mittel zum automatischen Umwandeln des Datums in ein Format des Kalender-Programms.

## Revendications

1. Un procédé donnant un accès automatique et direct à un utilisateur d'un ordinateur, à une tâche calendaire, à partir d'une tâche non calendaire, comprenant les étapes consistant à :
sélectionner par l'utilisateur une date dans ladite tâche non calendaire, et
provoquer automatiquement l'appel de ladite tâche calendaire en réponse à ladite sélection de ladite date,
de manière à afficher le calendrier utilisateur pour ladite date sélectionnée et offrir à l'utilisateur la possibilité d'effectuer des tâches planifiées de programmation souhaitées, y compris l'observation et l'édition.

2. Un procédé selon la revendication 1, dans lequel l'étape de sélection par l'utilisateur d'une date dans ladite tâche non calendaire comprend les étapes consistant à :
sélectionner par l'utilisateur un objet de tâche non calendaire contenant ladite date; et
rechercher automatiquement ladite date.

3. Un procédé selon la revendication 1, dans lequel l'étape de sélection par l'utilisateur d'une date dans ladite tâche non calendaire comprend les étapes consistant à :
sélectionner par l'utilisateur un objet de tâche non calendaire contenant ladite date;
rechercher automatiquement ladite date; et
traduire automatiquement ladite date sous un format de ladite tâche calendaire.

4. Un procédé selon la revendication 1, dans lequel l'étape de sélection par l'utilisateur d'une date dans ladite tâche non calendaire comprend les étapes consistant à :
sélectionner par l'utilisateur ladite date; et
traduire automatiquement ladite date sous un format de ladite tâche calendaire.

5. Un appareil pour offrir à l'utilisateur d'un ordinateur, un accès automatique direct à une tâche calendaire, à partir d'une tâche non calendaire, comprenant :
des moyens pour sélectionner par l'utilisateur une date dans ladite tâche non calendaire; et
des moyens réagissant à ladite sélection de ladite date pour provoquer automatiquement l'appel de ladite tâche calendaire
de manière à afficher le calendrier utilisateur pour ladite date sélectionnée et à offrir à l'utilisateur la possibilité d'effectuer Des tâches planifiées de programmation souhaitées, y compris l'observation et l'édition.

6. Un appareil selon la revendication 5, dans lequel lesdits moyens de sélection par l'utilisateur d'une date dans ladite tâche non calendaire comprennent :
des moyens pour sélectionner par l'utilisateur un objet de tâche non calendaire contenant ladite date; et
des moyens pour rechercher automatiquement ladite date.

7. Un appareil selon la revendication 5, dans lequel ledit moyen de sélection par l'utilisateur d'une date dans ladite tâche non calendaire comprend :
un moyen pour sélectionner par l'utilisateur un objet de tâche non calendaire contenant ladite date;
un moyen pour rechercher automatiquement ladite date; et
un moyen pour traduire automatiquement ladite date en un format de ladite tâche calendaire.

8. Un appareil selon la revendication 5, dans lequel ledit moyen de sélection par l'utilisateur d'une date dans ladite tâche non calendaire comprend:
un moyen pour sélectionner par l'utilisateur ladite date; et
un moyen pour traduire automatiquement ladite date sous un format de ladite tâche calendaire.
